# EUROPÄISCHE PATENTSCHRIFT

(11) **EP 2 110 995 B1**
(45) Veröffentlichungstag und Bekanntmachung des Hinweises auf die Patenterteilung: **29.11.2017**
(21) Anmeldenummer: 09004526.1
(22) Anmeldetag: 30.03.2009
(51) Int. Cl.: H04L 12/46, H04L 12/40

(54) **Datenübertragungsvorrichtung**
Data transfer device
Dispositif de transmission des données

(30) Priorität: 16.04.2008 DE 102008019277
(43) Veröffentlichungstag der Anmeldung: 21.10.2009
(73) Patentinhaber: Phoenix Contact GmbH & Co. KG, 32825 Blomberg (DE)
(72) Erfinder: Hoffmann, Michael, 32657 Lemgo (DE)
(74) Vertreter: Bill, Burkart Hartmut

(56) Entgegenhaltungen:
- EP-A1- 0 998 081
- WO-A1-2004/077771
- US-A1- 2004 158 634

## Beschreibung

Die vorliegende Erfindung betrifft das Gebiet der Datenübertragung zwischen Bussystemen.

In modernen Kommunikations- und Steuerungssystemen können zur Datenübertragung oder zur Steuerung unterschiedliche Feldbussysteme eingesetzt werden, die häufig miteinander gekoppelt werden müssen, wobei zwischen einem überlagerten Bussystem und einem unterlagerten Bussystem unterschieden werden kann. Das überlagerte Bussystem ist dasjenige Bussystem, das mit einem Steuerungssystem verbunden ist. Das unterlagerte Bussystem ist hingegen dasjenige Bussystem, das mit dem überlagerten Bussystem gekoppelt werden muss. In diesem Zusammenhang entsteht das Problem, Daten von dem einen Bussystem möglichst ohne zeitliche Verluste in das andere Bussystem zu übernehmen bzw. zu übertragen. Darüber hinaus müssen die Daten auch häufig in einer anderen Reihenfolge ausgegeben und es müssen den Daten Steuerdaten hinzugefügt werden. Üblicherweise werden hierfür Speicher, so genannte Buffer, angelegt, die von einer CPU (CPU: Central Processing Unit) umsortiert werden. Dieses Verfahren ist jedoch zeitaufwendig und führt zu einer hohen Auslastung des Prozessors.

Ansätze aus dem Stand der Technik sind in den Dokumenten WO 2004/077771 A1, EP 0 998 081 A1 und US 2004/0158634 A1 beschrieben.

Die Aufgabe der vorliegenden Erfindung ist die Schaffung eines effizienten Konzeptes zur Datenübertragung zwischen Bussystemen.

Diese Aufgabe wird durch die Merkmale der unabhängigen Ansprüche gelöst.

Die Erfindung basiert auf der Erkenntnis, dass die Ausgabereihenfolge von Daten bei einer Kopplung bekannter Busse bereits im Vorfeld bekannt ist, so dass bei Meidung einer CPU beispielsweise eine Kopiertabelle und eine Übertragungseinrichtung, die beispielsweise fest verdrahtet oder fest programmiert ist, zur Kopplung eingesetzt werden können. Hierzu werden die Daten geeignet umsortiert und in der seitens des zweiten, unterlagerten Busses geforderten Reihenfolge diesem zugeführt.

Die Übertragungseinrichtung ist beispielsweise eine auf die Bedürfnisse der Buskopplung angepasste Übertragungseinrichtung, welche zeitoptimiert Daten aus verschiedenen Speicherbereichen parallel verarbeiten kann. Die Übertragungseinrichtung hat somit bevorzugt stets den gleichen Aufbau bei den gleichen Bussystemen und ist deshalb schneller als eine universelle CPU.

Die Kopiertabelle ist derart beschaffen, dass verschiedene Informationen beispielsweise mit nur einem Speicherzugriff abgeholt werden können. Die Informationen umfassen beispielsweise die Offsetadresse eines Speichers eines der Busse, beispielsweise eine Offsetadresse eines PD-Speichers (PD: Prozessdaten) des Profinets, das beispielsweise eines der Bussysteme sein kann, Die Informationen können ferner den Datentyp betreffen und insbesondere angeben, wie groß das optionale PD-Datum ist. Die Informationen können ferner die Byte-Position in beispielsweise einem unterlagerten Feldbusobjekt angeben. Die vorstehend genannten Daten können durch die Übertragungseinrichtung beispielsweise auch parallel weiterverarbeitet werden.

Erfindungsgemäß können somit Prozessdaten zu Laufzeit ohne Verwendung einer CPU passend sortiert werden, so dass die Kopplung der Bussysteme beschleunigt durchgeführt werden kann. Dabei können insbesondere die Eigenarten und die Charakteristika der Bussysteme berücksichtigt werden,

Das unterlagerte Bussystem kann beispielsweise eine Konfiguration aufweisen, die sich nur bei Störungen im Datenfluss ändern und ein Eingreifen der CPU erfordern kann. Unter dieser Annahme kann ein Datenspeicher nach bestimmten Regeln in einen anderen Datenspeicher umcodiert werden, indem die Übertragungseinrichtung die Kopiertabelle beispielsweise in Form einer entsprechend codierten Tabelle, die in einem RAM-Speicher abgelegt sein kann (RAM: Random Access Memory), abarbeiten lässt. Die Kopiertabelle umfasst beispielsweise die Source-Adresse des entsprechenden Datums, die in dem Speicher abgelegt ist. Durch weitere Erweiterungen der Kopiertabelle können weitere Charakteristika der Bussysteme berücksichtigt werden, die beispielsweise die Anzeige eines Geräteanfangs oder einer Datenmenge betreffen. Gegebenenfalls kann die Übertragungseinrichtung Daten aus verschiedenen Speicherbereichen zusammenfassen.

Die Erfindung betrifft eine Datenübertragungsvorrichtung zur Übertragung von Daten zwischen einem ersten Bussystem und einem zweiten Bussystem mit einer Kopiertabelle zum Bereitstellen einer umsortierten Ausgabereihenfolge von Daten des ersten Bussystems und einer Übertragungseinrichtung zum Übertragen der Daten zwischen dem ersten Bussystem und dem zweiten Bussystem gemäß der umsortierten Ausgabereihenfolge.

Gemäß einer Ausführungsform sind die Daten des ersten Bussystems in einem Speicher speicherbar, wobei die Übertragungseinrichtung ausgebildet ist, die Daten gemäß der Ausgabereihenfolge aus dem Speicher auszulesen und sie dem zweiten Bussystem zuzuführen,

Gemäß einer Ausführungsform umfasst die Übertragungseinrichtung ein Steuerwerk, insbesondere ein fest verdrahtetes oder ein nicht-programmierbares oder ein fest programmiertes Steuerwerk, zum Zugreifen auf die Kopiertabelle.

Gemäß einer Ausführungsform umfasst die Übertragungseinrichtung einen Speicher, ein Steuerwerk und einen Multiplexer, wobei der Speicher vorgesehen ist, Daten des ersten Bussystems zu speichern, wobei ein Ausgang des Speichers mit dem Multiplexer verbunden ist und wobei ein Ausgangssignal des Multiplexers mit dem zweiten Bussystem koppelbar ist.

Gemäß einer Ausführungsform ist die Kopiertabelle ferner vorgesehen, Offset-Adresse oder einen Datentyp oder eine Byteposition bereitzustellen.

Gemäß einer Ausführungsform umfasst die Übertragungseinrichtung ferner einen zweiten Speicher zum Speichern von Zusatzdaten, beispielsweise von Management-Daten oder von Statusinformationen, wobei die Übertragungseinrichtung ausgebildet ist, die Daten mit den Zusatzdaten zu verknüpfen, um verknüpfte Daten zu erhalten, und die verknüpften Daten dem zweiten Bussystem zuzuführen.

Die Erfindung betrifft ferner ein Kommunikationssystem mit einem Speicher, der einem ersten Bussystem zugeordnet ist und der erfindungsgemäßen Datenübertragungsvorrichtung zur Übertragung von Daten zwischen dem ersten Speicher des ersten Bussystems und dem zweiten Bussystem.

Die Erfindung betrifft ferner ein Datenübertragungsverfahren zur Übertragung von Daten zwischen einem ersten Bussystem und einem zweiten Bussystem mit: Bereitstellen einer umsortierten Ausgabereihenfolge von Daten des ersten Bussystems mittels einer Kopiertabelle und Übertragen von Daten zwischen dem ersten Bussystem und dem zweiten Bussystem gemäß der umsortierten Ausgabereihenfolge.

Die Erfindung betrifft ferner ein Kommunikationsverfahren mit Speichern von Daten, die einem ersten Bussystem zugeordnet sind und Übertragen der gespeicherten Daten zwischen dem ersten Bussystem und dem zweiten Bussystem gemäß dem Verfahren zur Übertragung von Daten,

Die Erfindung betrifft ferner eine programmtechnisch eingerichtete Vorrichtung mit einem Computer-Programm zum Ausführen eines der erfindungsgemäßen Verfahren.

Die Erfindung betrifft ferner ein Computer-Programm zum Durchführen eines der Verfahren, wenn das Computer-Programm auf einem Computer abläuft.

Weitere Ausführungsbeispiele der Erfindung werden Bezug nehmend auf die beigefügten Zeichnungen näher erläutert. Es zeigen:
- Fig. 1: eine Datenübertragungsvorrichtung;
- Fig. 2: ein Kommunikationsszenario;
- Fig. 3: Prozessdaten in einem Profinet-Speicher;
- Fig. 4: eine Datenfolge in einem unterlagerten Bus;
- Fig. 5: ein Kommunikationssystem; und
- Fig. 6: ein Kommunikationssystem.

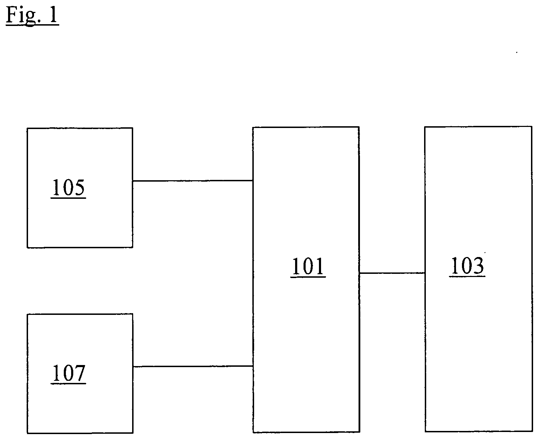

Die in Fig. 1 dargestellte Datenübertragungsvorrichtung umfasst eine Übertragungseinrichtung 101 und eine mit der Übertragungseinrichtung 101 gekoppelte Kopiertabelle 103. Die Übertragungseinrichtung 101 ist vorgesehen, Daten zwischen einem ersten Bussystem 105, beispielsweise einem Profinet-Bussystem, und einem zweiten Bussystem 107 gemäß der in der Kopiertabelle gespeicherten Sortiervorschrift bzw, Ausgabereihenfolge zu übertragen. Die Übertragungseinrichtung 101 kann ferner beispielsweise ein Steuerwerk umfassen, das den Zugriff auf die Kopiertabelle 103 sowie auf die Speicher der Bussysteme 105 und 107 regelt.

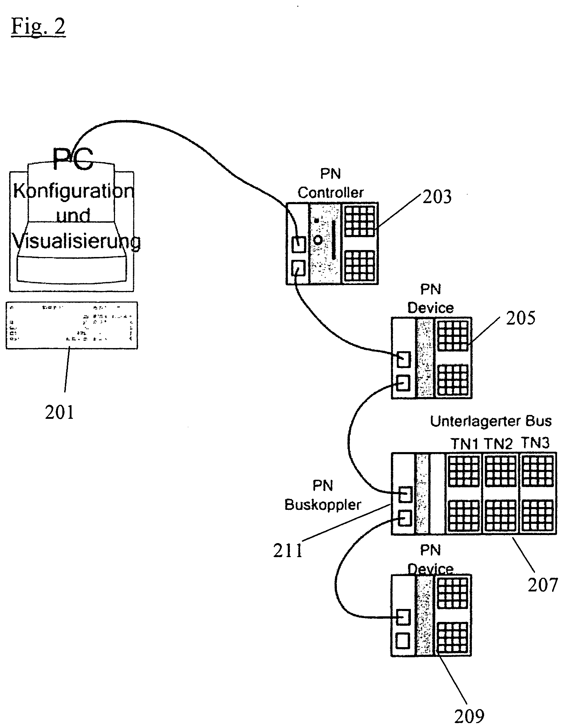

Fig. 2 zeigt ein Kommunikationsszenario mit einem PC 201, der beispielsweise die Konfiguration und die Visualisierung der Prozesse durchführt. Ferner sind ein PN-Controller 203 (PN: Profinet), eine Profinet-Vorrichtung 205, ein unterlagerter Bus 207 mit Teilnehmern TN1, TN2, TN3 sowie eine weitere Profinet-Vorrichtung 209 vorgesehen. Der unterlagerte Bus umfasst ferner einen Profinet-Buskoppler 211. Die Profinet-Vorrichtung 211 hat die Aufgabe, das unterlagerte Bussystem 207 mit dem Profinet-System zu koppeln. Dabei liefert das Profinet-System für jeden Slot, z.B. für jedes Feldbusgerät, Daten, die einen Benutzerstatus (IOCS: Input/Output Consumer Status) oder einen Providez-Status (IOPS: Input/Output Provider Status) betreffen. Die Profinet-Vorrichtung 211 kann beispielsweise die Statusdaten und die Prozessdaten in einem Buffer ausgeben. Dabei verteilt der Profinet-Controller 203 die Daten, so dass diese für den unterlagerten Bus umsortiert werden können und gegebenenfalls auch müssen.

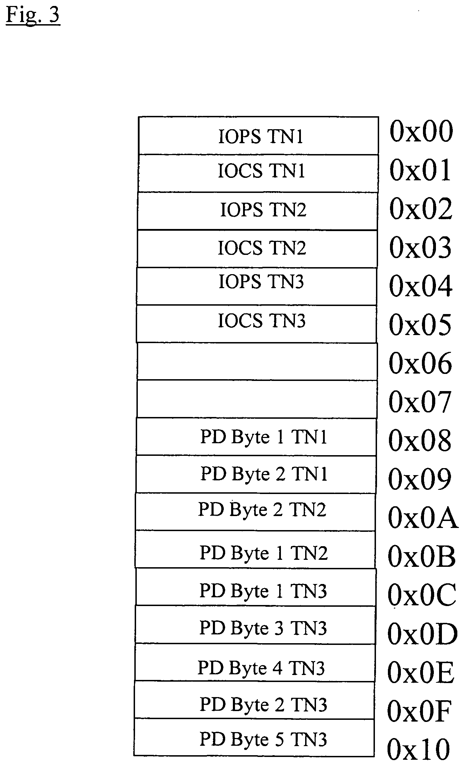

Der unterlagerte Bus 207 benötigt ferner beispielsweise Management-Daten für jeden Teilnehmer, wobei der Profinet-Status mit einem Management-Datum übertragen werden kann. Fig. 3 zeigt beispielhaft die Anordnung von Prozessdaten in einem Profinet-Speicher, wodurch ein Prozessdatenabbild festgelegt wird. Dabei sind die Speicherbereiche jeweils durch Adressen, beispielsweise 0x00, 0x01 bis 0x10, adressierbar und sind vorgesehen, die in Fig. 3 beispielhaft eingezeichneten Daten zu speichern.

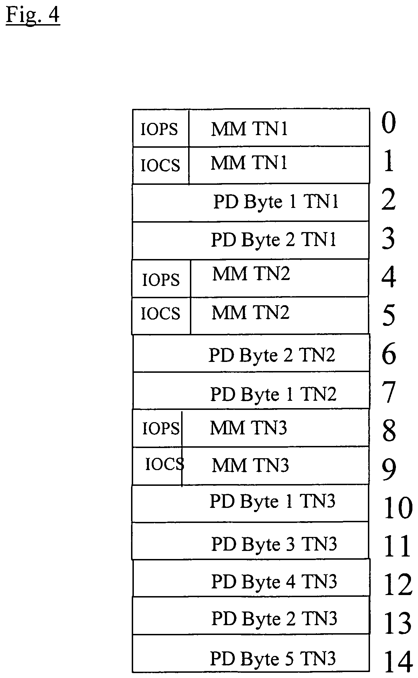

Fig. 4 zeigt einen unterlagerten Bus, der beispielsweise eine Datenfolge mit der in Fig. 3 dargestellten Datenanordnung benötigt. In Fig, 4 ist ferner die Ausgabereihenfolge der Daten angegeben. Zunächst werden die Daten 0 bis 3, die mit den Daten 0x00, 0x01 sowie 0x08 und 0x09 aus Fig. 3 zusammenhängen, ausgegeben. Dann werden die Daten 4 bis 7 dem zweiten Bussystem zugeführt, die mit den Bereichen 0x02, 0x03, 0x0A und 0x0B aus Fig. 3 zusammenhängen. Schließlich werden die Daten 8 bis 14 ausgegeben, die mit den Bereichen 0x04, 0x05, 0x0C bis 0x10 zusammenhängen. Dabei werden mit TN die Teilnehmer des unterlagerten Busses und mit MM das Management des unterlagerten Busses bezeichnet.

Für jeden Teilnehmer des unterlagerten Bussystems wird beispielsweise ein Management-Buffer (MM) mit Management-Bytes initialisiert, wobei die Kopiertabelle mit Offsetadressen sowie beispielsweise mit Extended Bits, die optional sind und weitere Informationen umfassen können, initialisiert wird. Die Übertragungsvorrichtung bzw. deren Steuerwerk erzeugt beispielsweise die Adresse für ein jeweiliges Steuerdatum, die linear aufsteigend beginnend mit 0x0 bis zum Ende des initialisierten Bereichs erhöht wird. Ein Datum wird dabei als eine Adresse für den Prozessdatenspeicher des Profinets benötigt. Die Extended Bits, beispielsweise Byte 1, Byte 2 und der Datentyp mit der Ausgabereigenfolge 8 bis 14 sowie in den dazugehörigen Bereichen aus Fig. 3 werden von dem Steuerwerk benötigt, um einen Datenzugriff zum Management-Buffer und zum Prozessdaten-Buffer im Profinet (PD Buffer Profinet) zu generieren. Wird eines der Bits Byte 1, 2 aktiv, so können die Management-Daten mit IOPS- bzw. mit IOCS-Daten des Profinet-Buffers verknüpft und beispielsweise über einen Multiplexer zur Ausgabe gebracht werden. Sind die Bits nicht aktiv, so können die Daten aus einem Profinet-Daten-Buffer beispielsweise direkt über einen Multiplexer ausgegeben werden. Das Bit Datatype wird verwendet, um zu unterscheiden, ob ein Byte oder ob zwei Bytes verschickt werden sollen. Dabei können über eine entsprechende Codierung der Extended Bits andere Funktionen ausgelöst werden.

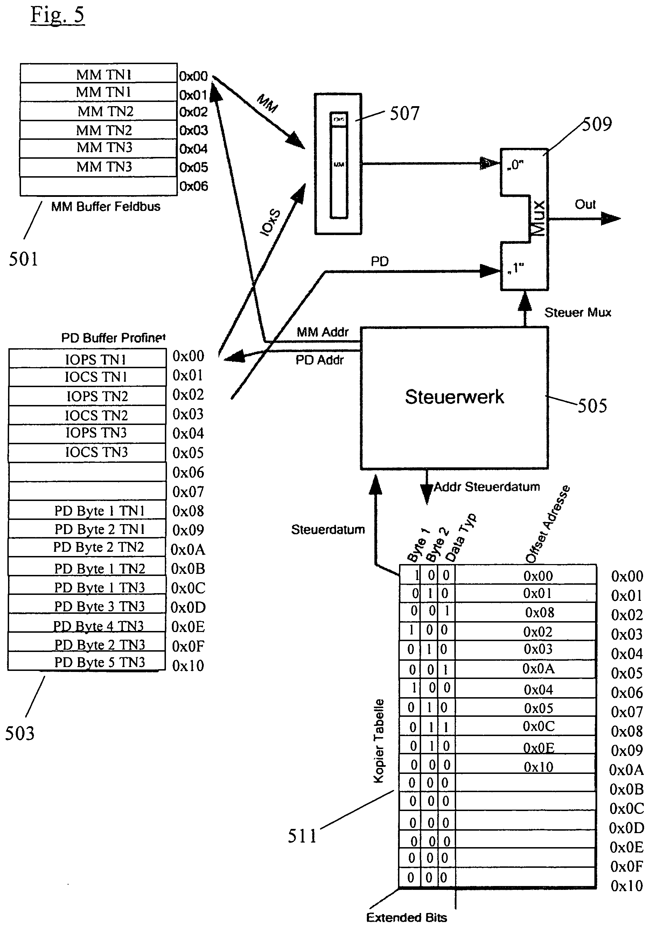

Fig. 5 zeigt ein Kommunikationsszenario mit einem Management-Buffer 501 und einem PD-Buffer-Profinet 503. Zur Buskopplung ist eine Übertragungseinrichtung umfassend ein Steuerwerk 505, einen Speicher 507, einen Multiplexer 509 sowie eine Kopiertabelle 511. Dabei hängen beispielsweise die Bereiche 0x00 und 0x01 des Management-Buffers 501 mit den Bereichen 0x00, 0x01 sowie 0x08 und 0x09 des Profinet-Busses 503 zusammen. Die Bereiche 0x02 und 0x03 hängen hingegen mit den Bereichen 0x02, 0x03, 0x0A und 0x0B des Profinet-Busses 503 zusammen. Die Bereiche 0x04 und 0x05 des Feldbusses 501 hängen mit den Bereichen 0x04, 0x05, 0x0C, 0x0D, 0x0E, 0x0F und 0x10 zusammen.

Das Steuerwerk 505 bestimmt die Prozessdatenadressen und die Managementadressen, wobei die jeweils adressierten Bereiche in dem Speicher 507 abgelegt werden. Ein Ausgang des Speichers 507 sowie der Profinet-Bus 503 sind mit Eingängen des Multiplexers 509 verbunden, das ein Ausgangssignal Out bereitstellt. Das Steuerwerk 505 ist vorgesehen, beispielsweise in Abhängigkeit von einem durch die Kopiertabelle 511 bereitgestellten Steuerdatum den Multiplexer zu steuern und jeweils einen dessen Ausgänge zu aktivieren. Der Multiplexer 509 wird somit als ein gesteuerter Schalter eingesetzt.

Der Zugriff auf die Kopiertabelle 511 beginnt beispielsweise bei Adresse 0, die danach beispielsweise um 1 erhöht wird. Die Kopiertabelle enthält beispielsweise zwei verschiedene Datenfelder und ist vorgesehen, beispielsweise die Offsetadresse für den Prozessdaten-Buffer-Profinet 503, den Datentyp und die Byte-Position bereitzustellen. Nach beispielsweise einem Takt liegen alle Daten vor, so dass das Steuerwerk 505 aus der Offsetadresse die Prozessdatenadresse erzeugt. Gleichzeitig erzeugt das Steuerwerk 505 die Management-Adresse, die ein Management-Byte für das unterlagerte Feldbussystem 503 festlegt, aus den Byte-Positionen Byte 1 und Byte 2. Das Steuerdatum SteuerMux, das den Multiplexer 509 steuert, wird parallel aus Byte 1 und Byte 2 generiert. Dabei liefern die beiden RAM-Buffer PD-Buffer Profinet 503 und MM-Buffer Feldbus 501 nach einem Takt Daten, die über eine Logik des Speichers 507 verknüpft werden können. Der Status aus dem PD-Buffer IOPS oder IOCS wird dabei beispielsweise in das Management-Byte eingeblendet, wobei die Daten über den Multiplexer 509 ausgegeben werden können. Dieses Verfahren wird mit einer um 1 erhöhten Adresse erneut durchgeführt.

Der Buffer 507 (MM: Management Daten) beinhaltet zunächst Management Daten für das unterlagerte Bussystem. Die Daten IOxS werden im Profinet System als IO Status übertragen und sollen im unterlagerten System im Management Wort übertragen werden. Es wird ferner unterschieden zwischen IOCS und IOPS, wobei mit IOxS sowohl IOCS als auch IOPS gemeint ist.

In dem Multiplexer 509 werden der Datenstrom für das unterlagerte Bussystem beispielsweise wie in Fig. 4 dargestellt zusammengestellt. Als erstes Datum soll das MM von TN1 mit dem IOPS TN1 ausgegeben werden. Hierfür werden die Daten aus den beiden Buffern geholt und im Block 507 (MM) verknüpft. Der MUX 509 wird so geschaltet, dass die Daten als OUT ausgegeben werden. Danach werden die Daten MM TN1 (Adresse1) mit dem IOCS TN1 verknüpft und über OUT ausgegeben. Als nächstes wird das Byte PD Byte 1 TN1 (Adresse 8) aus dem PD Buffer geholt und über den MUX über OUT ausgegeben. Die Reihenfolge wird in der Kopiertabelle 511 festgelegt, die von Adresse 0 aufsteigend abgearbeitet wird. Die Ausgangsdaten des Multiplexers können direkt dem unterlagerten Bus zugeführt werden, wobei auf eine Zwischenspeicherung von Daten verzichtet werden kann.

In dem Multiplexer (MUX) 509 wird der Datenstrom für das unterlagerte Bussystem zusammengestellt, um beispielsweise die in Fig. 3 dargestellte Form anzunehmen.

Als erstes Datum kann das MM von TN1 mit dem IOPS TN1 ausgegeben werden. Hierfür werden die Daten aus den beiden Buffern geholt und im Block MM verknüpft. Der MUX 509 wird so geschaltet, dass die Daten über den OUT-Ausgang ausgegeben werden. Danach werden die Daten MM TN1 (Adresse1) mit dem IOCS TN1 verknüpft und über den OUT-Ausgang ausgegeben.

Als nächstes kann das Byte PD Byte 1 TN1 (Adresse 8) aus dem PD Buffer geholt und über den MUX 509 über den OUT-Ausgang ausgegeben werden. Die Reihenfolge wird in der Kopier Tabelle festgelegt, die von Adresse 0 beispielsweise aufsteigend abgearbeitet wird.

In dem in Fig. 5 dargestellten Ausführungsbeispiel wird ausgenutzt, dass Feldbussysteme in der Regel Management-Informationen benötigen, um den Feldbus betreiben zu können. Hier stehen beispielsweise Informationen betreffend die Teilnehmernummer, den letzten Teilnehmer im Bus, den Abschaltstatus weiterführender Schnittstellen, den Aktivitätsstatus der Teilnehmer, die Gültigkeit oder die Ungültigkeit von Daten wie IOPS oder IOCS usw. zur Verfügung. Diese Informationen können zu den Daten des überlagerten Systems zusätzlich zu den Daten des unterlagerten Systems zugefügt werden. Beispielsweise können die Daten in den MM 501 übertragen werden.

Die Datenübertragungsvorrichtung ermöglicht somit eine Kopplung von verschiedenen Feldbussystemen, wobei Daten des einen Systems passend in das andere System sortiert werden können. Die Datenübertragungsvorrichtung kann beispielsweise in Hardware implementiert werden, so dass zur Anpassung von zwei Bussystemen Prozessdaten von dem einen System in jeweils das andere System effizient und schnell übernommen werden können, wenn entsprechende Buffer vorinitialisiert werden. Ferner können Daten aus dem Prozessdatenspeicher mit Management-Daten kombiniert werden, wobei die Kombination frei vorgenommen werden kann und wobei die Eigenarten der Bussysteme berücksichtigt werden. Die Extended Bits können ferner erweitert werden, so dass auch andere Funktionen zur Kopplung der beiden Systeme eingebaut werden können. Bevorzugt findet der Kopiervorgang nach einer Initialisierung ohne einen Prozessor statt.

Das erfindungsgemäße Kopierwerk aus Fig. 5 stellt die Daten aus Fig. 3 mit Daten aus dem zusätzlichen Buffer 507, in dem Managementdaten für das unterlagerte Bussystem abgelegt sein können, in eine Datensequenz am Ausgang OUT zu Daten, die in dem Datenabbild nach Fig. 4 abgebildet sind, zusammen. Dabei können die Daten am Ausgang OUT direkt über das unterlagerte Bussystem ausgegeben werden.

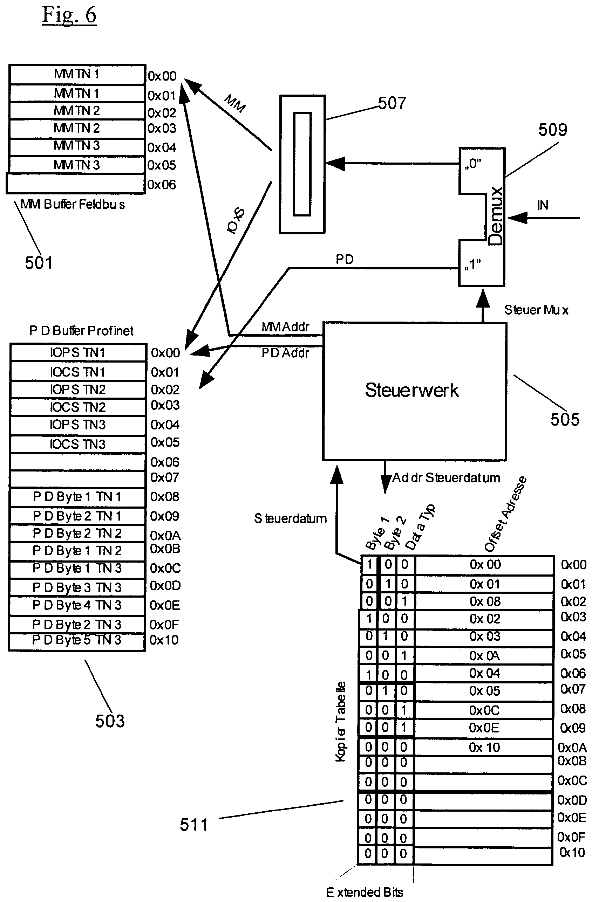

Fig. 6 zeigt das Kopierwerk aus Fig. 5, das in der einer entgegen gesetzten Richtung, was den Datenfluss anbetrifft, betrieben wird. Dabei stammen die Daten vom unterlagerten Bussystem und werden in dem PD Buffer 503 für das überlagerte Bussystem kopiert.

Das erfindungsgemäße Kopplungskonzept kann für unterschiedliche Feldbus-Bussysteme eingesetzt werden, z.B. für Profinet als überlagertes System und Interbus als unterlagertes System. Eine Kopplung besteht beispielsweise darin, dass Daten, die beispielsweise im Profinet System übertragen werden, auf einem unterlagerten System ausgegeben bzw. eingelesen werden können. Diese Aufgabe erledigt das erfindungsgemäße Kopierwerk, wobei die Daten des überlagerten Systems aus Fig. 3 aus Daten für das unterlagerte System, wie in Fig. 4 dargestellt, zusammengestellt werden können.

## Patentansprüche

1. Datenübertragungsvorrichtung zur Übertragung von Daten zwischen einem ersten Bussystem (105) und einem zweiten Bussystem (107), mit:
einer Kopiertabelle (103) zum Bereitstellen einer umsortierten Ausgabereihenfolge von Daten des ersten Bussystems; und
einer Übertragungseinrichtung (101) zum Übertragen der Daten zwischen dem ersten Bussystem und dem zweiten Bussystem gemäß der umsortierten Ausgabereihenfolge.

2. Datenübertragungsvorrichtung gemäß Anspruch 1, wobei die Daten des ersten Bussystems in einem Speicher speicherbar sind und wobei die Übertragungseinrichtung (101) ausgebildet ist, die Daten gemäß der Ausgabereihenfolge aus dem Speicher auszulesen und sie dem zweiten Bussystem zuzuführen.

3. Datenübertragungsvorrichtung nach einem der vorhergehenden Ansprüche, wobei die Übertragungseinrichtung (101) ein Steuerwerk, insbesondere ein fest verdrahtetes oder ein nicht-programmierbares oder ein fest programmiertes Steuerwerk, zum Zugreifen auf die Kopiertabelle (103) umfasst.

4. Datenübertragungsvorrichtung nach einem der vorhergehenden Ansprüche, wobei die Übertragungseinrichtung (101) einen Speicher, ein Steuerwerk und einen Multiplexer aufweist, wobei der Speicher vorgesehen ist, Daten des ersten Bussystems zu speichern, wobei ein Ausgang des Speichers mit dem Multiplexer verbunden ist und wobei ein Ausgangssignal des Multiplexers mit dem zweiten Bussystem koppelbar ist.

5. Datenübertragungsvorrichtung nach einem der vorhergehenden Ansprüche, wobei die Kopiertabelle (103) ferner vorgesehen ist. eine Offset-Adresse und/oder einen Datentyp und/oder eine Byteposition bereitzustellen.

6. Datenübertragungsvorrichtung nach einem der vorhergehenden Ansprüche, die ferner einen zweiten Speicher zum Speichern von Zusatzdaten, insbesondere von Management-Daten, aufweist, wobei die Übertragungseinrichtung (101) ausgebildet ist. die Daten mit den Zusatzdaten zu verknüpfen, um verknüpfte Daten zu erhalten, und die verknüpften Daten dem zweiten Bussystem zuzuführen.

7. Kommunikationssystem, mit:
einem Speicher, der einem ersten Bussystem zugeordnet ist; und
der Datenübertragungsvorrichtung gemäß einem der Ansprüche 1 bis 6 zur Übertragung von Daten zwischen dem ersten Speicher des ersten Bussystems und dem zweiten Bussystem.

8. Datenübertragungsverfahren zur Übertragung von Daten zwischen einem ersten Bussystem (105) und einem zweiten Bussystem (107), mit:
Bereitstellen einer umsortierten Ausgabereihenfolge von Daten des ersten Bussystem mittels einer Kopiertabelle (103); und
Übertragen von Daten zwischen dem ersten Bussystem und dem zweiten Bussystem gemäß der umsortierten Ausgabereihenfolge.

9. Kommunikationsverfahren, mit:
Speichern von Daten, die einem ersten Bussystem zugeordnet sind;
Übertragen der gespeicherten Daten zwischen dem ersten Bussystem und dem zweiten Bussystem gemäß dem Verfahren zur Übertragung von Daten nach Anspruch 8.

10. Programmtechnisch eingerichtete Vorrichtung mit einem Computer-Programm zum Ausführen eines der Verfahren gemäß Anspruch 8 oder 9.

11. Computer-Programm zum Durchführen eines der Verfahren gemäß Anspruch 8 oder 9, wenn das Computer-Programm auf einem Computer abläuft.

## Claims

1. A data transfer device for transferring data between a first bus system (105) and a second bus system (107), comprising:
a copy table (103) for providing a reordered output sequence of data of the first bus system; and
a transfer means (101) for transferring the data between the first bus system and the second bus system according to the reordered output sequence.

2. The data transfer device according to claim 1, wherein the data of the first bus system can be stored in a memory, and wherein the transfer means (101) is configured for reading out the data from the memory and to supply them to the second bus system according to said output sequence.

3. The data transfer device according to any one of the preceding claims, wherein the transfer means (101) comprises a control unit, in particular a hard-wired or a non-programmable or a permanently programmed control unit, for accessing the copy table (103).

4. The data transfer device according to any one of the preceding claims, wherein the transfer means (101) has a memory, a control unit, and a multiplexer, wherein the memory is configured for storing data of the first bus system, wherein an output of the memory is connected to the multiplexer, and wherein an output signal of the multiplexer can be coupled to the second bus system.

5. The data transfer device according to any one of the preceding claims, wherein the copy table (103) is further configured for providing an offset address and/or a data type and/or a byte position.

6. The data transfer device according to any one of the preceding claims, further comprising a second memory for storing additional data, in particular management data, wherein the transfer means (101) is configured for linking the data with the additional data in order to obtain linked data, and to supply the linked data to the second bus system.

7. A communication system, comprising:
a memory associated with a first bus system; and
the data transfer device according to any one of claims 1 to 6 for transferring data between the first memory of the first bus system and the second bus system.

8. A data transfer method for transferring data between a first bus system (105) and a second bus system (107), comprising:
providing a reordered output sequence of data of the first bus system using a copy table (103); and
transferring data between the first bus system and the second bus system according to the reordered output sequence.

9. A communication method, comprising:
storing data associated with a first bus system;
transferring the stored data between the first bus system and the second bus system according to the data transfer method of claim 8.

10. A program-related device, comprising a computer program for executing any one of the methods according to claim 8 or 9.

11. A computer program for performing any one of the methods according to claim 8 or 9 when the computer program is executed on a computer.

## Revendications

1. Dispositif de transmission de données pour la transmission de données entre un premier système de bus (105) et un deuxième système de bus (107), comprenant :
une table de copie (103) destinée à fournir un ordre de sortie réorganisé de données du premier système de bus ; et
un dispositif de transmission (101) pour la transmission des données entre le premier système de bus et le deuxième système de bus en fonction de l'ordre de sortie réorganisé.

2. Dispositif de transmission de données selon la revendication 1, dans lequel les données du premier système de bus peuvent être stockées dans une mémoire, et dans lequel le dispositif de transmission (101) est conçu pour extraire les données de la mémoire en fonction de l'ordre de sortie et de les amener au deuxième système de bus.

3. Dispositif de transmission de données selon l'une quelconque des revendications précédentes, dans lequel le système de transmission (101) comporte une unité de commande, en particulier une unité de commande fixement câblée ou une unité de commande non programmable ou une unité de commande fixement programmée, pour l'accès à la table de copie (103).

4. Dispositif de transmission de données selon l'une quelconque des revendications précédentes, dans lequel le système de transmission de données (101) comprend une mémoire, une unité de commande et un multiplexeur, dans lequel la mémoire est destinée à stocker les données du premier système de bus, dans lequel une sortie de la mémoire est reliée au multiplexeur et dans lequel un signal de sortie du multiplexeur peut être couplé au deuxième système de bus.

5. Dispositif de transmission de données selon l'une quelconque des revendications précédentes, dans lequel la table de copie (103) est en outre prévue pour fournir une adresse offset et/ou un type de données et/ou une position d'octet.

6. Dispositif de transmission de données selon l'une quelconque des revendications précédentes, qui comprend en outre une deuxième mémoire pour le stockage de données supplémentaires, en particulier de données de gestion, dans lequel le système de transmission de données (101) est conçu pour combiner les données aux données supplémentaires, afin d'obtenir des données combinées, et d'amener les données combinées au deuxième système de bus.

7. Système de communication, comprenant :
une mémoire qui est associée à un premier système de bus ; et
le dispositif de transmission de données selon l'une quelconque des revendications 1 à 6 pour la transmission de données entre la première mémoire du premier système de bus et le deuxième système de bus.

8. Procédé de transmission de données pour la transmission de données entre un premier système de bus (105) et un deuxième système de bus (107), comprenant :
la fourniture d'un ordre de sortie réorganisé de données du premier système de bus au moyen d'une table de copie (103) ; et
la transmission de données entre le premier système de bus et le deuxième système de bus conformément à l'ordre de sortie réorganisé.

9. Procédé de communication, comprenant :
le stockage de données qui sont associées à un premier système de bus ;
la transmission des données stockées entre le premier système de bus et le deuxième système de bus conformément au procédé de transmission de données selon la revendication 8.

10. Dispositif pouvant être conçu par programmation comprenant un programme informatique servant à exécuter l'un des procédés selon la revendication 8 ou 9.

11. Programme informatique pour la mise en oeuvre d'un des procédés selon la revendication 8 ou 9, lorsque le programme informatique est exécuté sur un ordinateur.
